# EUROPÄISCHE PATENTSCHRIFT

(11) **EP 2 145 085 B1**
(45) Veröffentlichungstag und Bekanntmachung des Hinweises auf die Patenterteilung: **12.01.2011**
(21) Anmeldenummer: 08749893.7
(22) Anmeldetag: 30.04.2008
(51) Int. Cl.: F01N 3/20, B60K 15/00, H01R 13/52

(54) **HEIZTOPFDECKEL EINES HEIZTOPFS EINES REDUKTIONSMITTELTANKS**
HEATING KETTLE COVER OF A HEATING KETTLE OF A REDUCING AGENT TANK
COUVERCLE D'UN POT CHAUFFANT D'UN RÉSERVOIR D'AGENT RÉDUCTEUR

(30) Priorität: 14.05.2007 DE 102007022585
(43) Veröffentlichungstag der Anmeldung: 20.01.2010
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2008/055297
(87) Internationale Veröffentlichungsnummer: WO 2008/138757

(56) Entgegenhaltungen:
- DE-A1- 19 938 131
- DE-A1-102005 030 954
- DE-U1-202006 010 615
- GB-A- 2 390 234
- US-A- 4 679 580

## Beschreibung

Die Erfindung betrifft eine Leitungsdurchführung durch einen Heiztopfdeckel eines Heiztopfs eines Reduktionsmitteltanks, wobei mindestens eine Leitung eine Öffnung des Heiztopfdeckels durchsetzt und mittels eines Dichtelements abgedichtet ist.

### Stand der Technik

Eine bekannte Methode zur Nachbehandlung eines Abgases einer Brennkraftmaschine ist das SCR-Verfahren (selective catalytic reduction / selektive katalytische Reduktion), bei dem der Schadstoff NOₓ unter Zuhilfenahme von flüssigem Reduktionsmittel zu N₂ und H₂O reduziert wird. Das flüssige Reduktionsmittel wird dabei in einem Reduktionsmitteltank gelagert und über eine hydraulische Leitung von dem Reduktionsmitteltank zu einem Dosiermodul gefördert, welches das Reduktionsmittel in dosierten Mengen dem Abgas beifügt. In dem Reduktionsmitteltank ist ein Schwalltopf angeordnet, der immer mit Reduktionsmittel gefüllt ist. In diesem Schwalltopf ist eine Heizung vorgesehen, die zum Auftauen von gefrorenem Reduktionsmittel dient. Aufgrund der Heizung wird der Schwalltopf allgemein als Heiztopf bezeichnet. Der Heiztopf wird mittels eines Heiztopfdeckels verschlossen, wobei der Heiztopfdeckel eine Öffnung aufweist, durch die mindestens eine hydraulische Leitung, wie oben beschrieben, und/oder eine elektrische Leitung zum Kontaktieren der in dem Heiztopf befindlichen Heizung oder gegebenenfalls eines Sensorelements geführt ist. Da das Reduktionsmittelsystem bei einem vorgegebenen Systemdruck arbeitet, ist es notwendig, dass auch der Druck in dem Heiztopf gehalten wird. Unter Anderem ist deshalb die Durchführung der Leitung durch den Heiztopfdeckel mittels eines Dichtelements abgedichtet. Aus dem Stand der Technik ist es bekannt, eine derartige Leitungsdurchführung mit einer Vergussmasse abzudichten, wobei die Leitung zunächst durch eine enge Bohrung durch den Heiztopfdeckel geführt wird und anschließend ein die Bohrung umgebendes, an dem Heiztopfdeckel ausgebildetes Reservoir mit der flüssigen/viskosen Vergussmasse gefüllt wird. Schließlich härtet die Vergussmasse aus und realisiert die Abdichtung der Leitungsdurchführung. Die engen Bohrungen haben den Nachteil, dass die Leitung beim Durchschieben beschädigt werden kann. Jedoch sind sie notwendig, um eine Herauslaufen der noch flüssigen Vergussmasse aus dem Reservoir zu verhindern. Es ist hierbei also nicht möglich, eine Leitung durch den Heiztopfdeckel zu führen, die beispielsweise mit einem Steckeranschluss versehen ist.

Die GB 2390234 beschreibt elektrische Verbindungsmittel für eine einem Kraftstofftank zugeordnete Pumpe.

### Offenbarung der Erfindung

Die Erfindung sieht vor, dass das Dichtelement als elastischer Steckdichtstopfen ausgebildet ist, der in eine dem Heiztopfdeckel zugeordnete Aufnahme dichtend eingesteckt ist. Anstelle der Vergussmasse ist also der Steckdichtstopfen vorgesehen. Dieser ist, wie der Name bereits sagt, derart ausgebildet, dass er in die Aufnahme gesteckt werden kann, wobei aufgrund seiner elastischen Ausbildung ein dichter Sitz in der Aufnahme gewährleistet ist. Im Gegensatz zu der Vergussmasse weist der Steckdichtstopfen eine vorbestimmte beziehungsweise vorgegebene Eigenform auf. Er kann als einzelnes Element gehandhabt werden, ohne dass sich seine Grundform verändert. Dadurch ist es möglich, mittels des Steckdichtstopfens auch größere Öffnungen - im Vergleich zum Stand der Technik - dicht zu verschließen. Dies führt dazu, dass die Größe der zu verschließenden Öffnung vorteilhafterweise so gewählt ist, dass auch an den Leitungen befestigte Elemente, wie zum Beispiel Steckkontakte oder ähnliches, durch die Öffnung hindurchgeführt werden können, bevor diese mittels des Steckdichtstopfens dicht verschlossen wird. Darüber hinaus wird ein Beschädigen der Leitung beim Durchführen durch die Öffnung des Heiztopfdeckels verhindert. Hierbei weist der Heiztopfdeckel mindestens eine randoffene nutenartige Leitungsaufnahme auf, in der die Leitung zumindest bereichsweise einliegt. Dies gewährleistet eine vorteilhafte Führung der Leitung an dem Heiztopfdeckel zum einen und zum anderen wird von der Leitung transportierte oder erzeugte Wärme an den Heiztopfdeckel abgegeben, sodass für den Fall, dass mehrere Leitungen in mehreren entsprechend ausgebildeten Leitungsaufnahmen in dem Heiztopfdeckel einliegen, eine günstige Wärmeübertragung von einer Leitung auf die andere ermöglicht ist. Weiterhin ist mit Vorteil vorgesehen, dass an dem Heiztopfdeckel ein Niederhalter angeordnet ist. Dieser kann beispielsweise auf den Heiztopfdeckel angeschraubt oder auf eine andere, dem Fachmann bekannten Art und Weise befestigt werden. Zweckmäßigerweise ist die Leitung von dem Niederhalter in der Leitungsaufnahme gehalten. Besonders bevorzugt ist die Leitung von dem Niederhalter in der Leitungsaufnahme geklemmt gehalten. Dadurch wird insbesondere eine Zugentlastung der Leitung realisiert, sodass für den Fall, dass in dem Heiztopf befindliches Reduktionsmittel friert und auftretende Verwerfungen des Eises die Leitung belasten wird, die Leitung ruhiggestellt wird.

Vorteilhafterweise ist die Aufnahme von dem Heiztopfdeckel gebildet. Der Steckdichtstopfen wird also direkt in den Heiztopfdeckel eingesteckt, wobei die Aufnahme und/oder der Steckdichtstopfen vorteilhafterweise derart ausgebildet sind, dass wenn der Steckdichtstopfen in die Aufnahme eingesteckt ist, ein selbstständiges Lösen des Steckdichtstopfens aus der Aufnahme verhindert wird. Vorteilhafterweise ist die Aufnahme dazu kleiner ausgebildet als der "freie" elastische Steckdichtstopfen, sodass dieser beim Einstecken elastisch verformt und in der Aufnahme eingeklemmt/gepresst wird.

Nach einer Weiterbildung der Erfindung wird die Aufnahme von einem Zwischenelement gebildet, das an dem Heiztopfdeckel angeordnet ist. Hierbei wird also der Steckdichtstopfen nicht direkt in den Heiztopfdeckel, sondern in das Zwischenelement, das an dem Heiztopfdeckel angeordnet ist, eingesteckt. Das Zwischenelement ist dabei zweckmäßigerweise derart ausgebildet und angeordnet, dass es die Öffnung des Heiztopfdeckels abdeckt. Hierdurch ist es möglich, die Öffnung noch weiter zu vergrößern, da der elastische Steckdichtstopfen in dem die Öffnung bedeckenden Zwischenelement eingesteckt ist. Dadurch können große, zu der entsprechenden Leitung zugehörige Elemente durch den Heiztopfdeckel mitdurchgeführt werden.

Damit der Heiztopf bei Verwendung des Zwischenelements dicht ist, ist vorteilhafterweise zwischen dem Dichtelement und dem Heiztopfdeckel ein Dichtmittel, insbesondere ein O-Ring, angeordnet. Vorteilhafterweise sind das Zwischenelement sowie die Öffnung kreiszylinderförmig ausgebildet.

Zweckmäßigerweise weist der Steckdichtstopfen mindestens eine Stopföffnung auf, in der die Leitung dichtend aufgenommen ist. Der Steckdichtstopfen umschließt somit die Leitung, wobei eine Dichtung zwischen der Leitung und dem Steckdichtstopfen gebildet ist. Bevorzugt weist die Stopföffnung einen kreiszylinderförmigen Querschnitt auf, der kleiner ausgebildet ist als der vorteilhafterweise kreiszylinderförmige Querschnitt der Leitung, sodass der Steckdichtstopfen im Bereich der Stopföffnung beim Durchführen der Leitung elastisch aufgeweitet wird, sodass eine feste und insbesondere dichte Verbindung zwischen Leitung und Steckdichtstopfen entsteht.

In einer vorteilhaften Weiterbildung weist der Steckdichtstopfen mindestens ein Spannelement auf, mit dem der Steckdichtstopfen an der Leitung befestigbar ist. Um eine sichere und dichte Verbindung von Steckdichtstopfen und Leitung zu erhalten, ist hierbei also vorgesehen, dass ein Spannelement den Steckdichtstopfen an der Leitung befestigt. Der Steckdichtstopfen weist dazu vorteilhafterweise einen dünnen, die Leitung umschließenden Halsbereich/Steckdichtstopfen-Hals auf, an dem das Spannelement angeordnet ist, wobei das Spannelement vorteilhafterweise als Blechspannelement ausgebildet ist.

Nach einer Weiterbildung der Erfindung ist der Steckdichtstopfen auf die Leitung aufvulkanisiert. Dadurch wird eine feste und dichte Verbindung ohne zusätzliche Spannmittel gewährleistet. Auch ist es denkbar, den Steckdichtstopfen auf die Leitung aufzuspritzen.

Um den Effekt der Wärmeübertragung zu verbessern beziehungsweise zu erhöhen, weist die Leitung eine elastische Ummantelung auf, mit der die Leitung formangepasst in der Leitungsaufnahme einliegt, sodass ein besonders großer Flächenkontakt zwischen Leitung und Heiztopfdeckel entsteht. Vorteilhafterweise ist der Steckdichtstopfen von dem Niederhalter beaufschlagt, sodass der Niederhalter den Steckdichtstopfen an einem Lösen aus der Aufnahme hindert. Darüber hinaus kann der Niederhalter den Steckdichtstopfen derart beaufschlagen, dass der Steckdichtstopfen in der Aufnahme elastisch verformt wird, sodass der dichtende Kontakt von Steckdichtstopfen mit der Aufnahme sowie mit der Leitung gewährleistet ist.

Zusätzlich oder alternativ ist vorgesehen, dass das Zwischenelement von dem Niederhalter beaufschlagt ist, sodass dieses an dem Heiztopfdeckel gehalten ist, sodass die Dichtung zwischen Zwischenelement und Heiztopfdeckel auf Dauer gewährleistet ist.

Schließlich ist vorgesehen, dass die Leitung eine elektrische Leitung, insbesondere eine Heizleitung und/oder Sensoranschlussleitung, oder eine hydraulische Leitung ist. Besonders bevorzugt sind mehrere Leitungen vorgesehen, wobei vorteilhafterweise zwei Leitungen als zu einer im Heiztopf angeordneten Heizung führenden Heizleitungen, mindestens eine weitere Leitung als Sensoranschlussleitung und mindestens eine weitere Leitung als hydraulische Leitung zum Ansaugen des Reduktionsmittels vorgesehen sind.

### Kurze Beschreibung der Zeichnungen

Im Folgenden soll die Erfindung anhand einiger Figuren näher erläutert werden. Dazu zeigen:
- Figur 1: einen Reduktionsmitteltank in einer schematischen Darstellung,
- Figur 2: ein Ausführungsbeispiel einer vorteilhaften Leitungsdurchführung,
- Figur 3: ein weiteres Ausführungsbeispiel einer vorteilhaften Leitungsdurchführung,
- Figur 4: ein weiteres Ausführungsbeispiel einer vorteilhaften Leitungsdurchführung,
- Figur 5: ein weiteres Ausführungsbeispiel einer vorteilhaften Leitungsdurchführung mit einem Zwischenelement,
- Figur 6: einen vorteilhaften Heiztopfdeckel in einer Draufsicht und
- Figur 7: einen Querschnitt durch den Heiztopfdeckel.

### Ausführungsform(en) der Erfindung

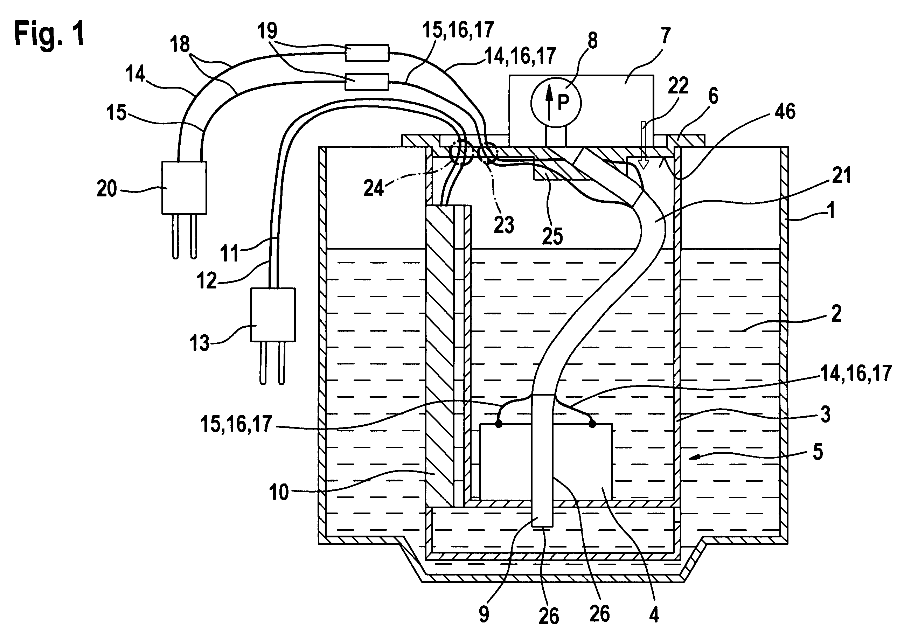

Die Figur 1 zeigt in einer schematischen Darstellung ein Ausführungsbeispiel eines Reduktionsmitteltanks 1 eines Abgasnachbehandlungssystems eines Kraftfahrzeugs. In dem Reduktionsmitteltank 1 befindet sich ein Reduktionsmittel 2, welches dem Abgas einer Brennkraftmaschine des Kraftfahrzeugs zugegeben wird. Das Reduktionsmittelsystem arbeitet mit einem vorgegebenen Systemdruck. In dem Reduktionsmitteltank 1 ist ein Schwalltopf 3 angeordnet, der stets gefüllt ist. In dem Schwalltopf 3 ist eine Heizung 4 angeordnet, die zum Aufheizen beziehungsweise Auftauen des Reduktionsmittels 2 dient. Der Schwalltopf 3 wird aufgrund der Heizung 4 auch Heiztopf 5 genannt. Die Heizung 4 ist am Boden des Heiztopfs 5 angeordnet. Durch die nach oben gerichtete Konvektion des von der Heizung 4 aufgetauten, erwärmten Reduktionsmittels 2 schreitet der Auftauvorgang ausgehend von der Heizung 4 nach oben zur Oberfläche fort. Auf dem Heiztopf 5 ist ein Heiztopfdeckel 6 angeordnet, der den Heiztopf 5 nach oben hin verschließt. Auf dem Heiztopfdeckel 6 ist außen ein Fördermodul 7 mit einer Reduktionsmittelpumpe 8 angeordnet. Von der Reduktionsmittelpumpe 8 führt eine Saugleitung 9 durch den Heiztopfdeckel 6 in den Heiztopf 5 und durch die Heizung 4 hindurch. In dem Heiztopf 5 ist weiterhin ein Level- und Temperatur-Sensor 10 angeordnet, der zur Erfassung der Temperatur sowie des Füllstandes des Reduktionsmittels 2 in dem Heiztopf 5 dient. Von dem Level- und Temperatur-Sensor 10 führen elektrische Leitungen 11, 12 durch den Heiztopfdeckel 6 hindurch nach außen, wobei die elektrischen Leitungen 11, 12 mit einem Stecker 13 verbunden sind. Von der Heizung 4 führen weiterhin zwei elektrische Leitungen 14 und 15 durch den Heiztopfdeckel 6. Die elektrischen Leitungen 14, 15 sind als Widerstandsdrähte 16 beziehungsweise als Edelstahl-Litzen 17 ausgebildet. Außerhalb des Heiztopfs 5 sind die elektrischen Leitungen 14 und 15 als Kupfer-Litzen 18 weitergeführt, wobei jeweils eine Edelstahl-Litze 17 mit einer Kupfer-Litze 18 über einen Verbinderstecker 19 verbunden ist. Die Kupfer-Litzen 18 haben gegenüber den Edelstahl-Litzen 17 einen weit geringeren elektrischen Widerstand, weshalb sie sich beim Heizen nicht erwärmen. Die Edelstahl-Litzen 17 weisen in dem Heiztopf 5 hingegen ein wesentlich besseres Korrosionsverhalten auf. Die Kupfer-Litzen 18, beziehungsweise die elektrischen Leitungen 14, 15, sind mit einem Anschlussstecker 20 verbunden. Innerhalb des Heiztopfs 5 werden die elektrischen Leitungen 14, 15 bereichsweise direkt an der hydraulischen Leitung 9 entlanggeführt. Dazu ist ein Schrumpfschlauch 21 bereichsweise auf die hydraulische Leitung 9 sowie die elektrischen Leitungen 14, 15 aufgeschrumpft. Aufgrund der Ausbildung der elektrischen Leitungen 14, 15 als Widerstandsdrähte 16 innerhalb des Heiztopfs 5 wird gewährleistet, dass es entlang des jeweiligen Widerstandsdrahtes 16 zum Auftauen des gefrorenen Reduktionsmittels 2 kommt und somit eine Verbindung der bereits um die Heizung 4 herum aufgetauten Flüssigkeit (Reduktionsmittel 2) zum Luftraum oberhalb des gefrorenen Reduktionsmittels entsteht. Durch das Entlangführen der Widerstandsleitungen 16 direkt an der hydraulischen Leitung 9 wird auch letztere vorteilhaft aufgetaut. Sämtliche Leitungen (9, 11, 12, 14, 15) müssen über eine dichte Leitungsdurchführung aus dem Heiztopf 5 herausgeführt werden. Über einen Pfad oder Rücklaufpfad 22 kann Reduktionsmittel 2 in den Heiztopf 5 geführt beziehungsweise rückgeführt werden. Über die hydraulische Leitung 9 kann an mehreren Saugstellen 26 Reduktionsmittel 2 aus dem Reduktionsmitteltank 1 beziehungsweise Heiztopf 5 gesaugt werden. Die Leitungsdurchführungen 23, 24 der elektrischen Leitungen 11, 12 und 14, 15 sollen im Folgenden näher erläutert werden.

Zum Abdichten einer Öffnung des Heiztopfdeckels 6, die normalerweise von einer der Leitungen (11, 12, 14, 15) durchsetzt wird, ist es üblich, zunächst möglichst kleine Öffnungen, insbesondere enge Bohrungen vorzusehen, durch die Leitung geführt wird. Anschließend wird die Öffnung mittels einer Vergussmasse als Dichtelement abgedichtet. Die enge Bohrung hat jedoch Nachteile, da die hindurchzuführende Leitung, insbesondere die Kupfer-Litze 18 oder Edelstahl-Litze 17, beim Durchführen beschädigt werden kann. Darüber hinaus bedeutet diese Art der Leitungsdurchführung einen hohen Montageaufwand, da zunächst die Edelstahl-Litzen 17 mittels des Schrumpfschlauchs 21 an der Saugleitung 9 montiert werden. Anschließend wird die Heizung an dem Heiztopf befestigt und mit Kunststoff umspritzt. Danach werden die Leitungen 11, 12 und 14, 15 durch die Öffnungen des Heiztopfdeckels 6 geführt und mittels der Vergussmasse abgedichtet. Dann werden die Edelstahl-Litzen 17 und Kupfer-Litzen 18 miteinander und die Kupfer-Litzen 18 mit dem Anschlussstecker 20 verbunden. Abschließend wird der Heizluftdeckel 6 mit dem gesamten Heizstrang und dem Temperatur- und Levelsensor 10 in dem Heiztopf montiert. Die Montage des Heiztopfs 5 benötigt also viele verschiedene Arbeitsvorgänge, die bei unterschiedlichen Spezialisten (Montagefirma/Konvektionär) durchgeführt werden müssen.

Wie in der Figur 1 dargestellt, werden sowohl die Hydraulikleitung 9 als auch die Edelstahl-Litzen 17 durch einen Dom 25 des Heiztopfdeckels 6 geführt. Die hydraulische Leitung 9 besteht zweckmäßigerweise aus einem Elastomerwerkstoff und mündet in eine in dem Dom 25 ausgebildete Öffnung. Durch eine Pressung zwischen der im Dom 25 eingebrachten Öffnung und der elastischen hydraulischen Leitung 9 kommt es zur Abdichtung zwischen denselben. Auf der Außenseite wird über ein hier nicht dargestelltes Dichtungselement die hydraulische Leitung 9 in das Fördermodul 7 weitergeführt. Bei der Durchführung der Edelstahl-Litzen 17 durch enge Bohrungen in dem Dom 25 können die Edelstahl-Litzen 17 an den Austrittsstellen ebenfalls beschädigt werden. Beim Austritt der Edelstahl-Litze 17 aus der Vergussmasse kann es ebenfalls zu Beschädigungen kommen, da sich die Vergussmasse an der Außenseite der Litzenummantelung hochzieht, wodurch es beim anschließenden Umlegen der Edelstahl-Litzen 17 zu einem Einschneiden der harten Gusskanten in die Litzenummantelung kommen kann. Dies kann unter anderem zu elektrischen Kurzschlüssen führen. Darüber hinaus ist die Dichtheit der mittels Vergussmasse abgedichteten Leitungsdurchführungen, insbesondere bei hohen Temperaturbelastungen, als kritisch anzusehen.

Die folgenden Figuren zeigen Ausführungsbeispiele für vorteilhafte Leitungsdurchführungen 23 der elektrischen Leitungen 14, 15, wobei die dargestellten und erläuterten Ausführungsbeispiele natürlich auch im gleichen Maße für die elektrischen Leitungen 11, 12 und die hydraulische Leitung 9 gelten. Aus der Figur 1 bekannte Elemente sind in den folgenden Figuren mit den gleichen Bezugszeichen versehen.

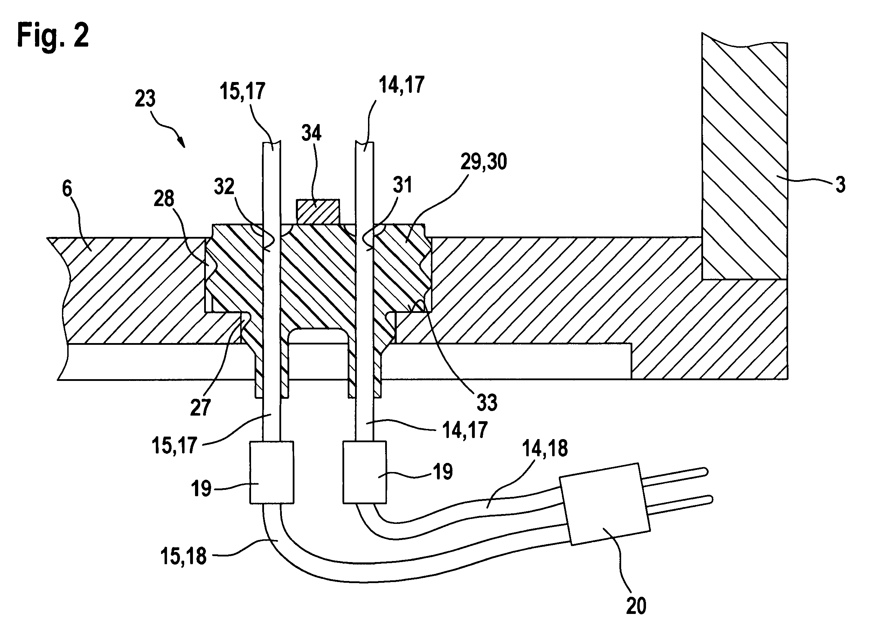

Die Figur 2 zeigt in einer Schnittdarstellung den Heiztopfdeckel 6 mit der Leitungsdurchführung 23. Die Leitungsdurchführung 23 weist eine in dem Heizdeckeltopf 6 ausgebildete Öffnung 27 auf, durch die die elektrischen Leitungen 14, 15 geführt sind. In dem Heiztopfdeckel 6 ist weiterhin eine Aufnahme 28 ausgebildet, die die Öffnung 27 im Wesentlichen umgibt. In die Aufnahme 28 ist ein Dichtelement 29, das als elastischer Steckdichtstopfen 30 ausgebildet ist, dichtend eingesteckt. Der Steckdichtstopfen 30 ist dabei derart elastisch verformt, dass seine Außenseite dichtend an der Innenseite der Aufnahme 28 anliegt. Der Steckdichtstopfen weist zwei Stopföffnungen 31, 32 auf, durch die jeweils eine elektrische Leitung 14 beziehungsweise 15 geführt und dichtend aufgenommen ist. Die Aufnahme 28 weist eine Schulter 33 auf, bis zu der der Steckdichtstopfen 30 eingesteckt ist. Der Steckdichtstopfen 30 ist derart ausgebildet, dass er aufgrund seiner elastischen Eigenschaften in der Aufnahme 28 gehalten wird. Um ein Lösen des Steckdichtstopfens 30 aus der Aufnahme zusätzlich zu verhindern, ist ein Niederhalter 34 vorgesehen, der den Steckdichtstopfen 30 in der Aufnahme 28 hält. Der Niederhalter 34 ist beispielsweise an dem Heiztopfdeckel 6 verschraubt. Die Öffnung 27 ist derart groß ausgebildet, dass die elektrischen Leitungen 14, 15 mitsamt den Verbindungssteckern 19 und gegebenenfalls mit dem Anschlussstecker 20 hindurchgeführt werden können. Dies ermöglicht, dass der gesamte Heizstrang des Heiztopfes 5, also Heizung 4, elektrische Leitungen 14, 15 inklusive Verbindungsstecker 19 und Anschlussstecker 20, in dem Heiztopf 5 angeordnet und montiert werden und anschließend die elektrischen Leitungen 14, 15 durch den Heiztopfdeckel 6 hindurchgeführt werden können. Hierdurch wird vermieden, dass der Reduktionsmitteltank 1 beziehungsweise der Heiztopf 5 zur Montage zwischen einer Montagefirma und einem Konvektionär mehrmals "hin- und herwandern" muss. Bei der Montage des Heizstrangs wird beispielsweise der Steckdichtstopfen 30 auf die Edelstahl-Litzen 17 aufgeschoben, wobei diese aufgrund der elastischen Ausbildung des Steckdichtstopfens 30 nicht beschädigt werden und dicht in den Stopföffnungen 31, 32 einliegen. Anschließend werden die Kupfer-Litzen 18 mittels der Verbindungsstecker 19 an die Edelstahl-Litzen 17 angeschlossen. Bei der Endmontage wird nun lediglich der Steckdichtstopfen 30 in die Aufnahme 33 des Heiztopfdeckels 6 eingesteckt und, bei Bedarf, der Niederhalter 34 montiert. Somit ist eine dichte Leitungsdurchführung 23 gewährleistet, die eine einfache und kostengünstige Montage gewährleistet, ohne ein Beschädigungsrisiko für die elektrischen Leitungen 14, 15 zu bieten.

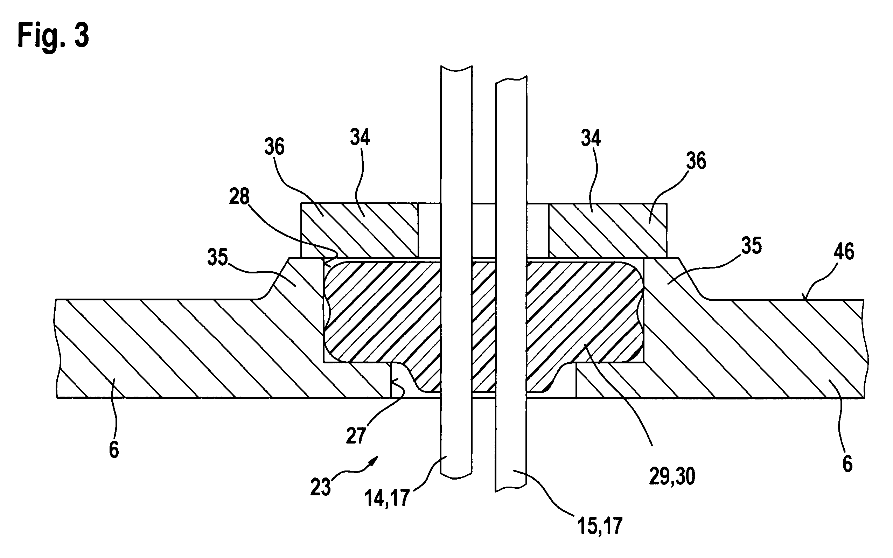

Die Figur 3 zeigt ein weiteres Ausführungsbeispiel für die vorteilhafte Leitungsdurchführung 23 in einer Schnittdarstellung. Im Unterschied zu dem Ausführungsbeispiel der Figur 2 ist der Steckdichtstopfen 30 auf die Edelstahl-Litzen 17 aufvulkanisiert, sodass eine besonders dichte Verbindung zwischen den Edelstahl-Litzen 17 und dem Steckdichtstopfen 30 gewährleistet ist. Darüber hinaus liegt der Niederhalter 34 auf die Aufnahme 28 begrenzenden Vorsprüngen 35 des Heiztopfdeckels 6 auf und hindert somit ein Lösen des Steckdichtstopfens 30 aus der Aufnahme 28. Im Gegensatz zu dem Niederhalter 34 aus der Figur 2, der den Steckdichtstopfen direkt und mit nur einem Element beaufschlagt, weist der Niederhalter 34 der Figur 3 zumindest zwei Elemente 36 auf, zwischen denen die Edelstahl-Litzen 17 hindurchgeführt sind.

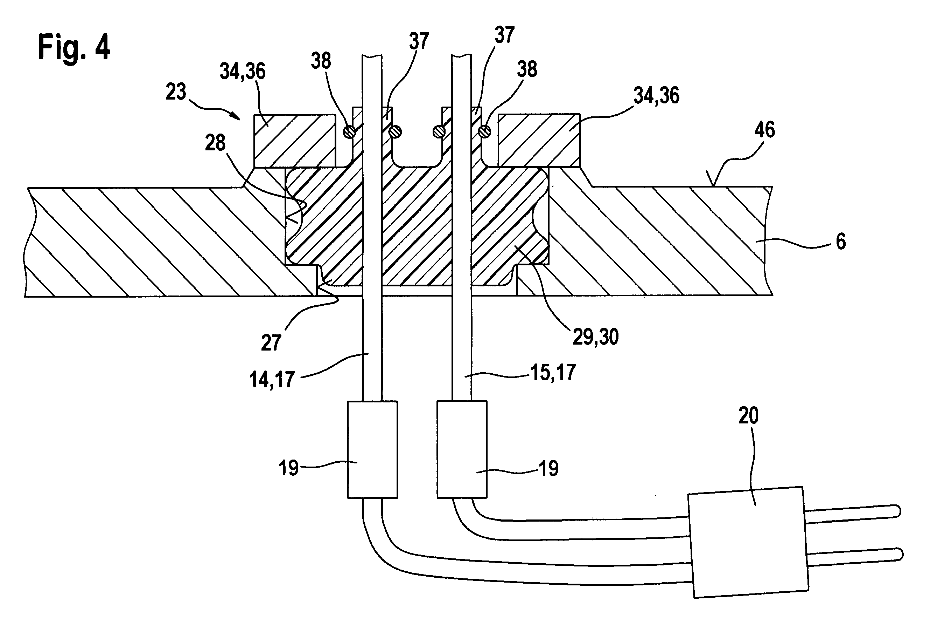

Die Figur 4 zeigt ein weiteres Ausführungsbeispiel der Leitungsdurchführung 23 in einem Querschnitt. Im Unterschied zu dem in der Figur 3 dargestellten Ausführungsbeispiel ist der Steckdichtstopfen 30 nicht auf die Edelstahl-Litzen 17 aufvulkanisiert, sondern, wie im Beispiel der Figur 2, auf diese aufgeschoben. Hierbei weist der Steckdichtstopfen zwei vorstehende, jeweils eine Edelstahl-Litze 17 bereichsweise umschließende Steckdichtstopfen-Hälse 37 auf. Um die Steckdichtstopfen-Hälse 37 herum sind jeweils ein Spannelement 38, insbesondere ein Blechspannelement, angeordnet, mittels dessen die Steckdichtstopf-Hälse 37 und somit der Steckdichtstopfen 30 an den Edelstahl-Litzen 17 durch Verklemmung befestigbar ist, wobei durch die Spannelemente 38 nicht nur die Befestigung, sondern auch eine dichte Verbindung zwischen Steckdichtstopfen 30 und Edelstahl-Litzen 17 gewährleistet ist.

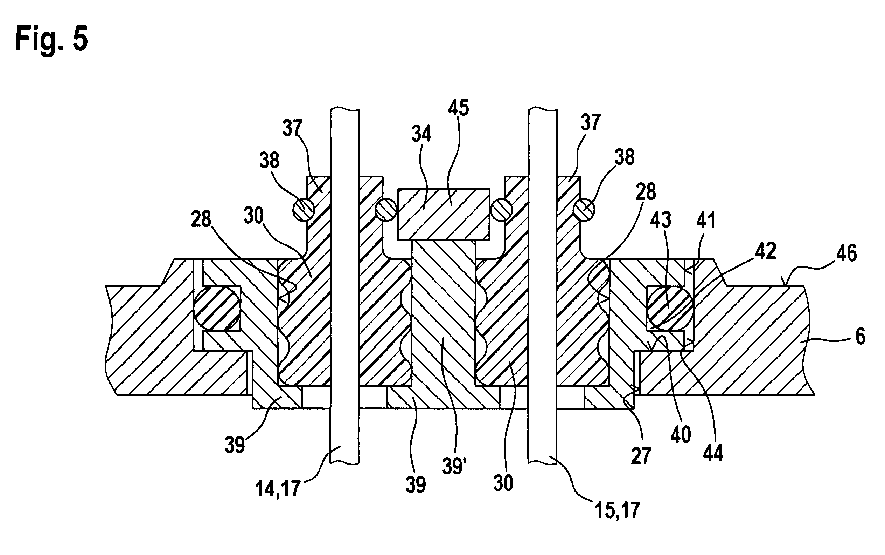

Die Figur 5 zeigt ein weiteres Ausführungsbeispiel der vorteilhaften Leitungsdurchführung 23 in einer Schnittdarstellung. Im Unterschied zu den Ausführungsbeispielen der vorhergehenden Figuren ist hierbei für jede der Edelstahl-Litzen 17 ein Steckdichtstopfen 30 vorgesehen, wobei die jeweilige Aufnahme 28, in die die Steckdichtstopfen 30 eingesteckt sind, von einem Zwischenelement 39 gebildet werden, welches an der Öffnung 27 des Heiztopfdeckels 6 angeordnet ist. Das Zwischenelement 39 liegt dabei vorteilhafterweise auf einer Schulter 40 auf, die von dem Heiztopfdeckel 6 gebildet ist. Das Zwischenelement 39 ist vorteilhafterweise im Wesentlichen kreiszylinderförmig ausgebildet und weist an einer Außenmantelfläche 41 eine nutartige, sich auf den gesamten Umfang erstreckende Aussparung 42 auf, in der ein O-Ring 43 als Dichtmittel einliegt. Der O-Ring 43 wirkt mit einer Innenfläche 44 des Heiztopfdeckels 6 zusammen, sodass zwischen Zwischenelement 39 und Heiztopfdeckel 6 eine Dichtung gewährleistet ist. Die Steckdichtstopfen 30 sind jeweils auf die entsprechende Edelstahl-Litze 17 aufgeschoben und mittels des Spannelements 38, wie oben beschrieben, befestigt. Das Zwischenelement 39 weist einen Mittelsteg 39' auf, der die Aufnahmen 28 voneinander trennt. Natürlich ist es auch denkbar, dass nur eine Aufnahme 28, wie in den vorhergehenden Beispielen, vorgesehen ist, die jedoch in dem Zwischenelement 39 ausgebildet ist. Der Mittelsteg 39' wirkt in dem vorliegenden Ausführungsbeispiel mit dem Niederhalter 34 derart zusammen, dass das Zwischenelement 39 an dem Heiztopfdeckel 6 gehalten wird. Dabei ist das das Zwischenelement 39 beaufschlagende Element 45 des Niederhalters 34 derart breit ausgebildet, dass es beidseitig über den Mittelsteg 39' vorsteht, sodass eine zusätzliche Sicherung gegen ein Lösen der Steckdichtstopfen 30 aus den Aufnahmen 28 gegeben ist. Durch das Zwischenelement 39 ist eine Möglichkeit geschaffen, die Öffnung 27 noch größer als in den vorhergehenden Ausführungsbeispielen zu gestalten und dabei dennoch den Heiztopfinnenraum dicht abzuschließen.

Natürlich können die in den Figuren 2 bis 5 dargestellten Ausführungsbeispiele mehr oder weniger elektrische und/oder hydraulische Leitungen aufweisen, die den Steckdichtstopfen 30 und/oder die Öffnung 27 durchsetzen. Darüber hinaus ist auch eine Kombination der oben beschriebenen Ausführungsbeispiele denkbar. Die Steckdicht-Hälse 37 können ebenso anstatt nach innen, wie in den Figuren 4 und 5 dargestellt, nach außen in die Umgebung ragend ausgebildet/ausgerichtet sein.

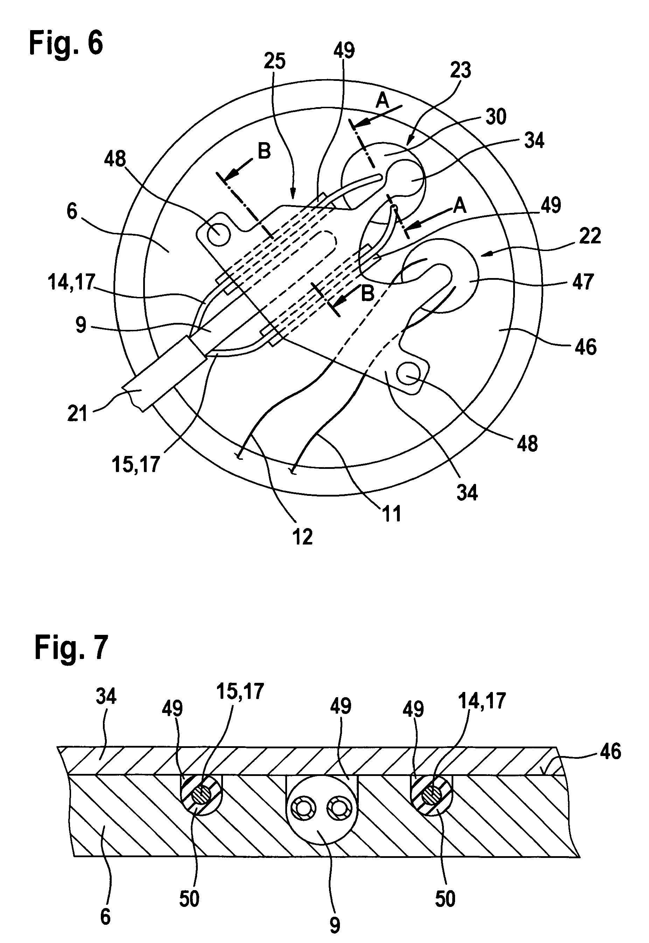

Die Figur 6 zeigt den Heiztopfdeckel 6 in einer Draufsicht auf die Unterseite 46, wobei der hier dargestellte Heiztopfdeckel 6 im Wesentlichen dem Ausführungsbeispiel der Figur 2 entspricht. In der Figur 6 ist der Niederhalter 34 im Ganzen dargestellt, wobei der Niederhalter 34 sowohl mit dem Steckdichtstopfen 30 der in den vorhergehenden Figuren beschriebenen Leitungsdurchführung 23 als auch mit einem Steckdichtstopfen 47 der Leitungsdurchführung 22 zusammenwirkt, wobei die Leitungsdurchführung 22 entsprechend der Leitungsdurchführung 23 gestaltet ist. Die Schnittlinie A-A kennzeichnet die in den Figuren 2 bis 5 dargestellten Querschnitte durch den Heizkopfdeckel 6. Der Niederhalter 34 weist zwei Schraubenöffnungen 48 auf, mittels derer der Niederhalter 34 an dem Heiztopfdeckel 6 befestigt werden kann. Alternativ oder zusätzlich kann der Niederhalter 34 auch mittels Rastelementen an dem Heiztopfdeckel 6 befestigt werden. Die Schnittlinie B-B kennzeichnet einen in der Figur 7 dargestellten Querschnitt durch den Heiztopfdeckel 6, der im Folgenden beschrieben werden soll.

Die Figur 7 zeigt den Querschnitt B-B durch den Heiztopfdeckel 6, den Niederhalter 34 sowie die elektrischen Leitungen 14, 15 und die hydraulische Leitung 9. Der Heiztopfdeckel 6 weist für jede der Leitungen 14, 15, 9 parallel zueinander eine randoffene nutenartige Leitungsaufnahme 49 vorteilhafterweise im Bereich des Doms 25 auf, in der jeweils eine Leitung 14, 15 oder 9 einliegt. Die Edelstahl-Litzen 17 weisen in dem vorliegenden Ausführungsbeispiel eine elastische Ummantelung 50, insbesondere Elastomer-Ummantelung, auf. Dadurch ist ein guter, leitfähiger Kontakt zwischen dem Heiztopfdeckel 6 und der jeweiligen Edelstahl-Litze 17 gewährleistet, sodass die von den Edelstahl-Litzen 17 erzeugte Wärme besonders vorteilhaft auf die Saugleitung 9 über den Heiztopfdeckel 6 übertragen wird. Der Niederhalter 34 liegt dabei auf den Leitungen 14, 15 und 9 auf, sodass diese in den Leitungsaufnahmen 49 eingeklemmt sind. Dadurch wird eine Zugentlastung für die Leitungen 14, 15 und 9 gewährleistet, die die Leitungen 9, 14, 15 vor dem Austritt aus dem Heiztopf 5 trotz beim Einfrieren auftretender Verwerfungen des gefrorenen Reduktionsmittels im Heiztopf 5 ruhigstellt. Die Zugentlastung bildet dabei ebenfalls einen Teil der Leitungsdurchführung 23.

Insgesamt ist durch die vorteilhafte Ausbildung der Leitungsdurchführung 23 beziehungsweise 22 eine Möglichkeit geschaffen, den gesamten Heizstrang unabhängig von dem Heiztopfdeckel vorzumontieren, wodurch der Herstellungsaufwand sowie die Herstellungszeit verringert wird und darüber hinaus die Dichtheit des Reduktionsmittelssystems beziehungsweise des Heiztopfs 5 dauerhaft gewährleistet ist.

Ebenso kann der Niederhalterdeckel und der Heiztopfdeckel derart gestaltet sein, dass eine Zugentlastung für die elektrischen Leitungen 11, 12 gewährleistet ist. Darüber hinaus ist der Rücklauf 22 vorteilhafterweise ebenfalls im Bereich des Doms 25 angeordnet, sodass auch dieser mittels der Edelstahl-Litzen 17 aufgetaut werden kann.

## Patentansprüche

1. Heiztopfdeckel eines Heiztopfs eines Reduktionsmitteltanks, mit einer Leitungsdurchführung durch den Heiztopfdeckel, wobei mindestens eine Leitung eine Öffnung des Heiztopfdeckels durchsetzt und mittels eines Dichtelements abgedichtet ist, wobei das Dichtelement (29) als elastischer Steckdichtstopfen (30) ausgebildet ist, der in eine dem Heizkopfdeckel (6) zugeordnete Aufnahme (28) dichtend eingesteckt ist, **dadurch gekennzeichnet, dass** dass der Heiztopfdeckel (6) mindestens eine randoffene nutenartige Leitungsaufnahme (49) aufweist, in der die Leitung (9,14,15) zumindest bereichsweise einliegt, und wobei an dem Heiztopfdeckel (6) mindestens ein Niederhalter (34) angeordnet ist, und wobei die Leitung (9,14,15) von dem Niederhalter (34) in der Leitungsaufnahme (49), insbesondere geklemmt gehalten ist.

2. Heiztopfdeckel nach Anspruch 1, **dadurch gekennzeichnet, dass** die Aufnahme (28) von dem Heiztopfdeckel (6) gebildet ist.

3. Heiztopfdeckel nach einem der vorhergehenden Ansprüche, **dadurch gekennzeichnet, dass** die Aufnahme (28) von einem Zwischenelement (39) gebildet ist, das an dem Heiztopfdeckel (6) angeordnet ist.

4. Heiztopfdeckel nach einem der vorhergehenden Ansprüche, **dadurch gekennzeichnet, dass** zwischen dem Zwischenelement (39) und dem Heiztopfdeckel (6) ein Dichtmittel, insbesondere ein O-Ring (43) angeordnet ist.

5. Heiztopfdeckel nach einem der vorhergehenden Ansprüche, **dadurch gekennzeichnet, dass** der Steckdichtstopfen (30) mindestens eine Stopföffnung (31,32) aufweist, in der die Leitung (14,15) dichtend aufgenommen ist.

6. Heiztopfdeckel nach einem der vorhergehenden Ansprüche, **dadurch gekennzeichnet, dass** der Steckdichtstopfen (30) mindestens ein Spannelement (38) aufweist, mit dem der Steckdichtstopfen (30) an der Leitung (14,15) befestigbar ist.

7. Heiztopfdeckel nach einem der vorhergehenden Ansprüche, **dadurch gekennzeichnet, dass** der Steckdichtstopfen (30) auf die Leitung (14,15) aufvulkanisiert ist.

8. Heiztopfdeckel nach einem der vorhergehenden Ansprüche, **dadurch gekennzeichnet, dass** die Leitung (14,15) eine elastische Ummantelung (50) aufweist.

9. Heiztopfdeckel nach einem der vorhergehenden Ansprüche, **dadurch gekennzeichnet, dass** der Steckdichtstopfen (30) von dem Niederhalter (34) beaufschlagt ist.

10. Heiztopfdeckel nach einem der vorhergehenden Ansprüche, **dadurch gekennzeichnet, dass** das Zwischenelement (39) von dem Niederhalter (34) beaufschlagt ist

11. Heiztopfdeckel nach einem der vorhergehenden Ansprüche, **dadurch gekennzeichnet, dass** die Leitung (9,11,12,14,15) eine elektrische Leitung (11,12,14,15), insbesondere eine Heizleitung (14,15) und/oder Sensoranschlussleitung (11,12), oder eine hydraulische Leitung (9) ist.

## Claims

1. Cover for a kettle of a reducing agent tank, having a line bushing through the kettle cover, with at least one line passing through an opening in the kettle cover and being sealed off by means of a sealing element, with the sealing element (29) being in the form of an elastic plug-type sealing stopper (30) which is inserted into a receptacle (28) which is associated with the kettle cover (6) in a sealing manner, **characterized in that** the kettle cover (6) has at least one groove-like line receptacle (49) which is open at the edge and in which at least regions of the line (9, 14, 15) are situated, and **in that** at least one holding-down device (34) is arranged on the kettle cover (6), and **in that** the line (9, 14, 15) is held, in particular in a clamped manner, in the line receptacle (49) by the holding-down device (34).

2. Kettle cover according to Claim 1, **characterized in that** the receptacle (28) is formed by the kettle cover (6).

3. Kettle cover according to either of the preceding claims, **characterized in that** the receptacle (28) is formed by an intermediate element (39) which is arranged on the kettle cover (6).

4. Kettle cover according to one of the preceding claims, **characterized in that** a sealing means, in particular an O-ring (43), is arranged between the intermediate element (39) and the kettle cover (6).

5. Kettle cover according to one of the preceding claims, **characterized in that** the plug-type sealing stopper (30) has at least one stopper opening (31, 32) in which the line (14,15) is accommodated in a sealing manner.

6. Kettle cover according to one of the preceding claims, **characterized in that** the plug-type sealing stopper (30) has at least one clamping element (38) by way of which the plug-type sealing stopper (30) can be fixed to the line (14, 15).

7. Kettle cover according to one of the preceding claims, **characterized in that** the plug-type sealing stopper (30) is fitted on the line (14, 15) by vulcanization.

8. Kettle cover according to one of the preceding claims, **characterized in that** the line (14, 15) has an elastic sheathing (50).

9. Kettle cover according to one of the preceding claims, **characterized in that** the plug-type sealing stopper (30) is acted on by the holding-down device (34).

10. Kettle cover according to one of the preceding claims, **characterized in that** the intermediate element (39) is acted on by the holding-down device (34).

11. Kettle cover according to one of the preceding claims, **characterized in that** the line (9, 11, 12, 14, 15) is an electrical line (11, 12, 14, 15), in particular a heating line (14, 15) and/or a sensor connection line (11, 12), or a hydraulic line (9).

## Revendications

1. Couvercle d'un pot chauffant d'un réservoir d'agent réducteur, comprenant un passage de conduite à travers le couvercle de pot chauffant, au moins une conduite traversant une ouverture du couvercle de pot chauffant et étant rendue étanche au moyen d'un élément d'étanchéité, l'élément d'étanchéité (29) étant réalisé sous forme d'obturateur enfichable élastique (30) qui est enfiché de manière hermétique dans un logement (28) associé au couvercle de pot chauffant (6), **caractérisé en ce que** le couvercle de pot chauffant (6) présente au moins un logement de conduite (49) en forme de rainure ouverte sur les bords, dans lequel la conduite (9, 14, 15) s'insère au moins en partie, et **en ce qu'**au moins un dispositif de retenue (34) est disposé sur le couvercle de pot chauffant (6), et **en ce que** la conduite (9, 14, 15) est maintenue notamment serrée par le dispositif de retenue (34) dans le logement de conduite (49).

2. Couvercle de pot chauffant selon la revendication 1, **caractérisé en ce que** le logement (28) est formé par le couvercle de pot chauffant (6).

3. Couvercle de pot chauffant selon l'une quelconque des revendications précédentes, **caractérisé en ce que** le logement (28) est formé par un élément intermédiaire (39) qui est disposé sur le couvercle de pot chauffant (6).

4. Couvercle de pot chauffant selon l'une quelconque des revendications précédentes, **caractérisé en ce qu'**un moyen d'étanchéité, en particulier un joint torique (43) est disposé entre l'élément intermédiaire (39) et le couvercle de pot chauffant (6).

5. Couvercle de pot chauffant selon l'une quelconque des revendications précédentes, **caractérisé en ce que** l'obturateur enfichable (30) présente au moins une ouverture d'obturateur (31, 32), dans laquelle la conduite (14, 15) est reçue de manière hermétique.

6. Couvercle de pot chauffant selon l'une quelconque des revendications précédentes, **caractérisé en ce que** l'obturateur enfichable (30) présente au moins un élément de serrage (38) avec lequel l'obturateur enfichable (30) peut être fixé à la conduite (14, 15).

7. Couvercle de pot chauffant selon l'une quelconque des revendications précédentes, **caractérisé en ce que** l'obturateur enfichable (30) est vulcanisé sur la conduite (14, 15).

8. Couvercle de pot chauffant selon l'une quelconque des revendications précédentes, **caractérisé en ce que** la conduite (14, 15) présente une gaine élastique (50).

9. Couvercle de pot chauffant selon l'une quelconque des revendications précédentes, **caractérisé en ce que** l'obturateur enfichable (30) est sollicité par le dispositif de retenue (34).

10. Couvercle de pot chauffant selon l'une quelconque des revendications précédentes, **caractérisé en ce que** l'élément intermédiaire (39) est sollicité par le dispositif de retenue (34).

11. Couvercle de pot chauffant selon l'une quelconque des revendications précédentes, **caractérisé en ce que** la conduite (9, 11, 12, 14 ,15) est une conduite électrique (11, 12, 14, 15), en particulier une conduite chauffante (14, 15) et/ou une conduite de raccordement de capteur (11, 12) ou une conduite hydraulique (9).
